Europäisches Patentamt

European Patent Office

Office européen des brevets

(19)

(11) Veröffentlichungsnummer: **0 122 520**
**B1**

(12) **EUROPÄISCHE PATENTSCHRIFT**

(45) Veröffentlichungstag der Patentschrift:
**13.07.88**

(21) Anmeldenummer: **84103410.1**

(22) Anmeldetag: **28.03.84**

(51) Int. Cl.⁴: **B 62 J 7/04**

(54) Gepäckträger für Zweiradfahrzeuge.

(30) Priorität: **12.04.83 DE 3312994**
**23.08.83 DE 3330286**
**03.12.83 DE 3343844**

(43) Veröffentlichungstag der Anmeldung:
**24.10.84 Patentblatt 84/43**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**BE - A - 456 681**
**DE - A - 2 546 593**
**DE - U - 8 028 999**
**FR - A - 832 268**
**US - A - 4 350 361**

(73) Patentinhaber: **ESGE-Marby GmbH + Co. KG., Braker Strasse 1, D-4800 Bielefeld 16 (DE)**

(72) Erfinder: **Belka, Heinrich, Uchteweg 3, D-4800 Bielefeld 11 (DE)**

(74) Vertreter: **Rüger, Rudolf, Dr.-Ing. et al, Webergasse 3 Postfach 348, D-7300 Esslingen/Neckar (DE)**

## Beschreibung

Die Erfindung geht aus von einem Gepäckträger für Zweiradfahrzeuge mit den Merkmalen des Oberbegriffs des Anspruchs 1.

Ein solcher gattungsgemässer Gepäckträger ist aus dem DE-U-8 028 999 bekannt. Bei diesem sitzen die parallel zueinander verlaufend abgebogenen Schenkelenden der seitlichen Schenkelpaare in einer gemeinsamen ovalen Öffnung des an dem Fahrzeugrahmen zu befestigenden Klemmteils. Die Fixierung der aneinander anliegenden Schenkelenden in dem Klemmteil erfolgt mittels einer Klemmschraube, die zwischen den Schenkelenden hindurchführt. Diese weisen hierzu in ihrer Flanke einander gegenüberliegend halbzylindrische Ausnehmungen auf, um das Einsetzen der Klemmschraube zu ermöglichen.

Damit die Schenkelenden in unterschiedlicher Höhe in dem Klemmteil zu fixieren sind, enthält letzteres längs der ovalen Öffnung für die Schenkelenden verteilt mehrere Bohrungen für die Klemmschraube, die mit Abstand voneinander angeordnet sind.

Bei dem gattungsgemässen Gepäckträger ist wegen der formschlüssigen Verbindung zwischen der Klemmschraube und den Schenkelenden lediglich eine Verstellung der Schenkelenden entsprechend dem Abstand der Bohrungen für die Klemmschraube möglich.

Darüber hinaus erfordert die Befestigung des Klemmteils an den Schenkelenden eine genaue Ausrichtung der Schenkelenden zueinander, so dass sich die seitlichen halbzylindrischen Ausnehmungen zu einer zylindrischen Öffnung ergänzen, damit die Klemmschraube eingeführt werden kann.

Aus der US-A-4 350 361 ist ein weiterer Gepäckträger bekannt, dessen parallel zueinander abgewinkelte Schenkelenden in einem Klemmteil stecken, das für jedes Schenkelende eine eigene Durchgangsbohrung enthält. Durch Einprägen von Kerben ist das Klemmteil unverrückbar auf den Schenkelenden festgelegt.

Bei dieser Ausführungsform des Gepäckträgers führen sämtliche Schenkelenden durch das entsprechende Klemmteil hindurch, wobei ein Schenkelende zur Befestigung an dem Ansatzstück des Fahrzeugrahmens vorgesehen ist. Das Klemmteil dient deshalb auch ausschliesslich der formschlüssigen Verbindung der Schenkelenden untereinander, d.h. mit demjenigen Schenkelende, das an dem Fahrzeugrahmen angeschraubt ist.

Ausgehend hiervon ist es Aufgabe der Erfindung, einen Gepäckträger zu schaffen, der ohne die Querstabilität der Stützschenkel zu beeinträchtigen, einen grossen stufenlosen Verstellbereich der beiden Schenkel jedes Stützschenkelpaares aufweist, um damit ohne Veränderung an dem Gepäckträger selbst eine Anpassung an die Gegebenheiten unterschiedlicher Zweiradfahrzeugtypen zu ermöglichen.

Gelöst wird diese Aufgabe durch einen Gepäckträger mit den Merkmalen des Hauptanspruches.

Bei diesem Gepäckträger behalten die Schenkelenden der Stützschenkelpaare ihre zylindrische oder runde Querschnittsgestalt, so dass keine Schwächung und Beeinträchtigung der Querstabilität eintritt. Ausserdem kann der Verstellbereich für alle praktischen Bedürfnisse genügend gross gewählt werden, ohne dass dazu besondere Veränderungen an den Schenkeln oder dem Gepäckträger vorgenommen werden müssten. Darüber hinaus sind die Schenkelenden in den Aufnahmebohrungen des Klemmteiles einwandfrei gehaltert und fixiert, was bedeutet, dass sich der Gepäckträger auch durch eine hohe Belastbarkeit auszeichnet. Die beim Stand der Technik erforderliche Notwendigkeit, Gepäckträger mit unterschiedlicher Stütz-Schenkellänge herzustellen und auf Vorrat zu halten, entfällt.

Um die individuelle Einstellung der beiden freien Schenkelenden eines Stützschenkelpaares zu erleichtern, kann in einer bevorzugten Ausführungsform jeder der beiden Aufnahmebohrungen ein eigenes Klemmstück mit Klemmschraube zugeordnet sein. Auch ist es zweckmässig, wenn das flache Klemmteil auf einer Seite eine an das Ansatzstück anzulegende Anlagefläche aufweist und das Klemmstück bzw. die Klemmstücke im Bereiche dieser Anlagefläche angeordnet ist bzw. sind. Im montierten Zustand liegt dann das Klemmstück auf der dem Ansatzstück zugewandten und von diesem abgedeckten Seite des Klemmteiles, während die Klemmschraube selbst von der Vorderseite her leicht zugänglich ist.

Jedes Klemmstück kann mit Vorteil als Klemmkeil oder -konus ausgebildet sein, der in einer entsprechenden Ausnehmung des Klemmteiles geführt ist und mit seiner Keil- oder Konusfläche durch eine wandseitige Öffnung der zugeordneten Aufnahmebohrung auf dem Schenkelende abgestützt ist. Dabei ergeben sich sehr einfache konstruktive Verhältnisse, wenn der Klemmkeil oder -konus eine Gewindebohrung für die von der Aussenseite des Klemmteiles her zugängliche Klemmschraube aufweist.

Um das Klemmteil möglichst klein und gefällig ausbilden zu können, ist es vorteilhaft, wenn jedes Klemmstück und die zugeordnete Klemmschraube in dem Bereich zwischen den beiden Aufnahmebohrungen angeordnet sind. Sind zwei Klemmstücke vorhanden, von denen jedes einem der Schenkelenden zugeordnet ist, so können die beiden Klemmstücke, in Richtung der beiden Schenkelenden gesehen, nebeneinander liegend angeordnet sein.

Häufig besteht von Seiten des Benutzers des Zweiradfahrzeuges der Wunsch, den Gepäckträger gemeinsam mit einem elastischen Gurt zu benutzen, der zum Festhalten der auf dem Gepäckträger befindlichen Gepäckstücke dient. Zum Einhängen des Gurtes kann an dem Klemmteil gleich ein eine Gurtöse aufweisender Gurthalter angeordnet sein, der entweder einstückig an das Klemmteil angeformt ist oder mittels einer Klemmschraube an dem Klemmteil befestigt ist.

Falls mit dem Gepäckträger grössere Lasten transportiert werden sollen, für die ein Gepäckträger mit zwei Paaren von Stützschenkeln zu schwach oder zu schwingungsempfindlich ist, wird zweckmässigerweise zwischen den Stützschenkeln jedes Paares ein weiterer Stützschenkel angeordnet, dessen freies Ende zu den Schenkelenden des jeweils zugehörigen Stützschenkelpaares parallel verlaufend abgebogen und an dem Klemmteil befestigt ist.

Eine besonders schwingungsunempfindliche Anordnung wird dabei erhalten, wenn diejenigen beiden Stützschenkel, die sich, bezogen auf die Fahrzeuglängsachse, gegenüberstehen und am weitesten hinten an dem die Gepäckauflage bildenden Rahmen angreifen, ausgehend von den Klemmteilen in Richtung auf den Rahmen, aufeinander zu laufen.

Eine sehr einfache und nach wie vor höhenverstellbare Befestigung eines Gepäckträgers mit drei Stützschenkeln an jeder Seite sieht die Verwendung eines Klemmteiles vor, das für den mittleren Stützschenkel eine dritte Aufnahmebohrung aufweist, die zwischen den beiden äusseren Aufnahmebohrungen für den vorderen und den hinteren Stützschenkel liegt und parallel zu diesen Aufnahmebohrungen verläuft. In diesem Falle wird das Klemmteil sehr flach, wenn die Längsachsen der Aufnahmebohrungen alle in einer Ebene liegen. Weiterer Platz kann eingespart werden, wenn die dritte Aufnahmebohrung für den mittleren Stützschenkel als Sackloch ausgeführt ist, was ausserdem den Vorteil hat, dass die mittlere Stütze formschlüssig gehalten ist und nicht nach unten durchrutschen kann.

Die Montage und die Klemmung der Schenkelenden in dem Klemmteil werden sehr einfach, wenn die dritte Aufnahmebohrung für den mittleren Stützschenkel derart dicht an einer der beiden äusseren Aufnahmebohrungen angeordnet ist, dass sie randseitig in diese übergeht, während zwischen der dritten Aufnahmebohrung für den mittleren Stützschenkel und der von dieser getrennten äusseren Aufnahmebohrung eines der Klemmstücke angeordnet ist, das durch eine wandseitige Öffnung in der dritten Aufnahmebohrung und eine weitere wandseitige Öffnung in der von der dritten Aufnahmebohrung getrennten äusseren Aufnahmebohrung auf den zugehörigen Schenkelenden abgestützt ist, weil hierdurch durch Verspannen des einen Klemmstückes sämtliche drei Schenkelenden in dem Klemmteil festgelegt werden.

Wenn eine Vormontage des Klemmteiles an den Stützschenkeln des Gepäckträgers möglich sein soll, enthält das Klemmstück zwei in der Höhe gegeneinander versetzte Klemmstücke, von denen eines unter dem Boden der sackförmigen dritten Aufnahmebohrung angeordnet ist und sich lediglich auf einem der Schenkelenden abstützt.

In der Zeichnung sind Ausführungsbeispiele des Gegenstandes der Erfindung dargestellt. Es zeigen:

Fig. 1 einen Gepäckträger gemäss der Erfindung in einer Seitenansicht,

Fig. 2 den Gepäckträger nach Fig. 1 in einer Draufsicht,

Fig. 3 den Gepäckträger nach Fig. 1 im Ausschnitt und in einem anderen Massstab, unter Veranschaulichung der freien Schenkelenden und des an einem Ansatzstück eines Fahrzeugrahmens befestigten Klemmteiles eines Stütz-Schenkelpaares, in einer Seitenansicht,

Fig. 4 die Anordnung nach Fig. 3, geschnitten längs der Line IV–IV der Fig. 3, in einer Draufsicht,

Fig. 5 einen Gurthalter für den Gepäckträger nach Fig. 1, in einer Draufsicht,

Fig. 6 den Gurthalter nach Fig. 5, geschnitten längs der Linie VI–VI der Fig. 5, in einer Seitenansicht,

Fig. 7 ein weiteres Ausführungsbeispiel eines Gepäckträgers gemäss der Erfindung, teilweise geschnitten im Bereich des hinteren Stützschenkels entlang der Linie VII–VII nach Fig. 8 in einer Seitenansicht,

Fig. 8 den Gepäckträger nach Fig. 7 in einer Vorderansicht, geschnitten entlang der Linie VIII–VIII nach Fig. 7,

Fig. 9 das Klemmteil für den Gepäckträger nach Fig. 7 in einem Längsschnitt,

Fig. 10 das Klemmteil nach Fig. 9, geschnitten entlang der Linie X–X nach Fig. 9,

Fig. 11 das Klemmteil nach Fig. 9, wiederum geschnitten entlang der Linie X–X, jedoch mit eingesetzten Schenkelenden und mit Klemmstück,

Fig. 12 und 13 ein weiteres Ausführungsbeispiel des Klemmteils des Gepäckträgers nach Fig. 7, mit angeformter Gurtöse und

Fig. 14 und 15 ein weiteres Ausführungsbeispiel des Klemmteils des Gepäckträgers nach Fig. 1, mit angeformter Gurtöse und lediglich einem Klemmteil für die beiden Schenkelenden in einer Seitenansicht bzw. geschnitten entlang der Linie XIV–XIV nach Fig. 12.

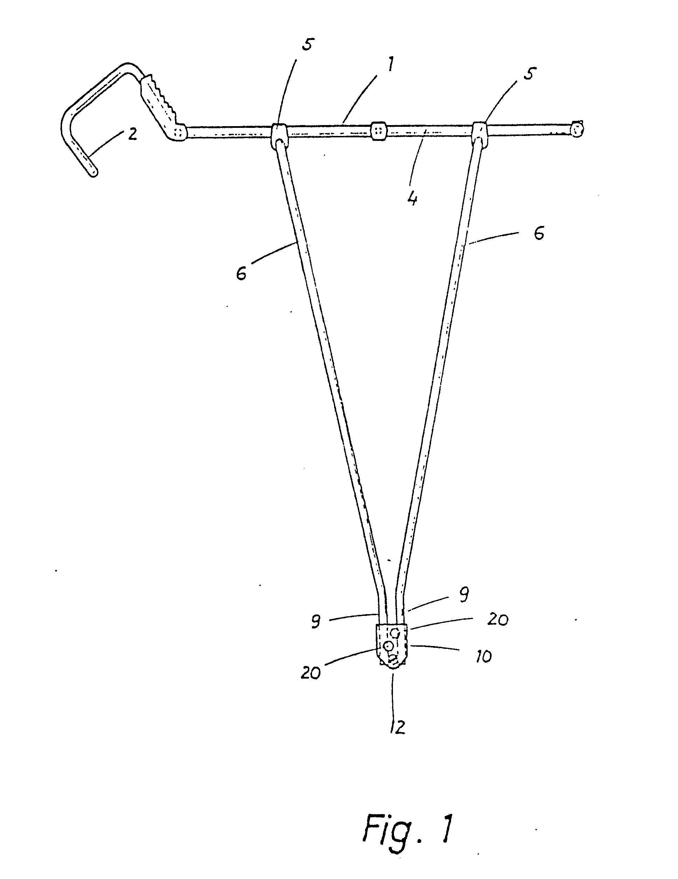

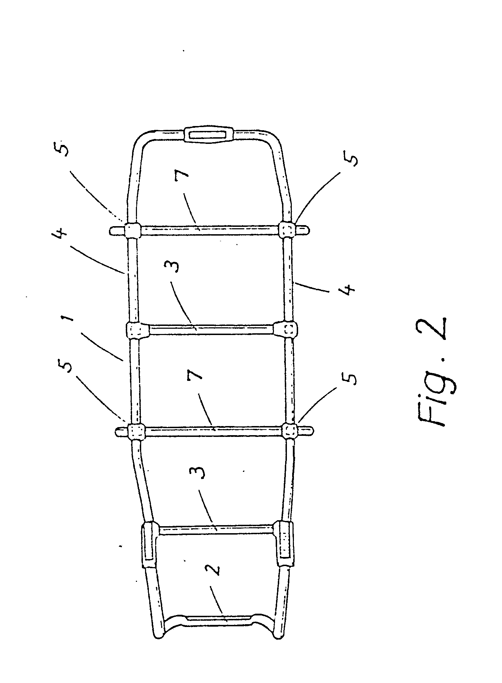

Der in den Fig. 1, 2 dargestellte Gepäckträger besteht aus einem die Gepäckauflagefläche enthaltenden, länglichen geschlossenen Rahmen 1, an dessen Vorderseite eine Querlasche 2 ausgebildet ist, mit welcher der Gepäckträger an der Hintergabel eines Zweiradfahrzeuges befestigt werden kann. An jedem der Seitenteile 4 des Rahmens 1 ist mittels Kunststofflagerteilen 5 ein nach unten zu abgehendes Stütz-Schenkelpaar gelenkig befestigt, dessen Schenkel 6 in der aus Fig. 1 ersichtlichen Weise V-förmig aufeinander zu verlaufen. Die Anordnung ist dabei derart getroffen, dass die vorderen und die hinteren Schenkel 6 der beiden Schenkelpaare über einen einstückig angeformten Querschenkel 7 miteinander verbunden sind, der in der in Fig. 2 dargestellten Weise die gleiche Aufgabe wie die Querstreben 3 übernimmt.

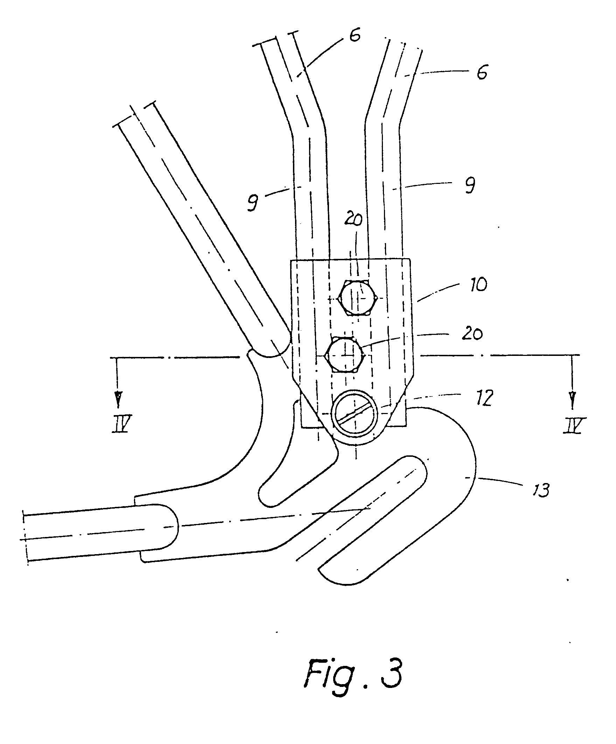

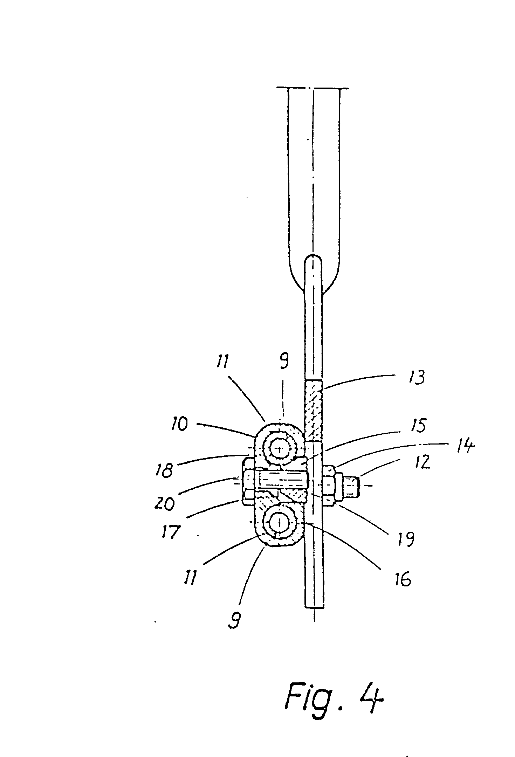

Die aus zylindrischem Rohr- oder Drahtmaterial bestehenden Schenkel 6 jedes Stütz-Schenkelpaares sind an ihren freien Enden bei 9 derart abgebogen, dass sie in kleinem Abstand nebeneinander liegend etwa parallel zueinander ausgerichtet sind (vergl. Fig. 1, 3). Auf die freien Enden 9 der Schenkel 6 jedes Stütz-Schenkelpaares ist ein flaches massives Klemmteil 10 aufgesetzt, das zwei im Abstand voneinander angeordnete und parallel zueinander verlaufende durchgehende zylindrische Aufnahmebohrungen 11 für die freien Schenkelenden 9 aufweist. Das Klemmteil 10 ist in dem Bereich zwischen den beiden Aufnahmebohrungen 11 mit einer Bohrung für eine Befestigungsschraube 12 versehen, die durch eine entsprechende Bohrung eines bei 13 in Fig. 3, 4 dargestellten Ansatzstückes eines in seinen anderen Teilen nicht weiter dargestellten Fahrzeugrahmens hindurchgeht. Das Klemmteil 10 ist mittels der Befestigungsschraube 12 und einer Mutter 14 an dem Ansatzstück 13 festgeschraubt, wobei die Befestigungsschraube 12 der Aufnahme weiterer Streben von Schutzblechen oder dgl. dienen kann.

Den beiden Aufnahmebohrungen 11 sind zwei Klemmstücke zugeordnet, von denen eines bei 15 in Fig. 4 veranschaulicht ist und die in Gestalt eines Klemmkeiles oder -konus ausgebildet sind. Die Klemmkeile oder -konen 15 sind im Bereiche einer an das Ansatzstück anzulegenden Anlagefläche 16 des Klemmteiles 10 angeordnet. Zu diesem Zwecke weist das Klemmteil 10 eine zu der Anlagefläche 16 hin sich öffnende nutartige Ausnehmung 17 (Fig. 4) auf, in der die beiden Klemmkeile oder -konen 15, in Längsrichtung der freien Schenkelenden 9 gesehen, nebeneinander liegend angeordnet und geführt sind. Jeder Klemmkeil oder -konus 15 ist mit einer Keil- oder Konusfläche 18 durch eine wandseitige Öffnung der zugeordneten Aufnahmebohrung 11 auf dem entsprechenden Schenkelende 9 abgestützt. Er weist eine durchgehende Gewindebohrung 19 auf, in die eine Klemmschraube 20 eingeschraubt ist, die von der Vorderseite des Klemmteiles 10 her betätigt werden kann.

Die beiden Klemmschrauben 20 sind in der aus Fig. 3 ersichtlichen Weise in dem Bereich zwischen den beiden freien Schenkelenden 9 angeordnet. Sie können deshalb bei mittels der Befestigungsschraube 12 festmontiertem Klemmteil 10 von aussen her in einfacher Weise betätigt werden.

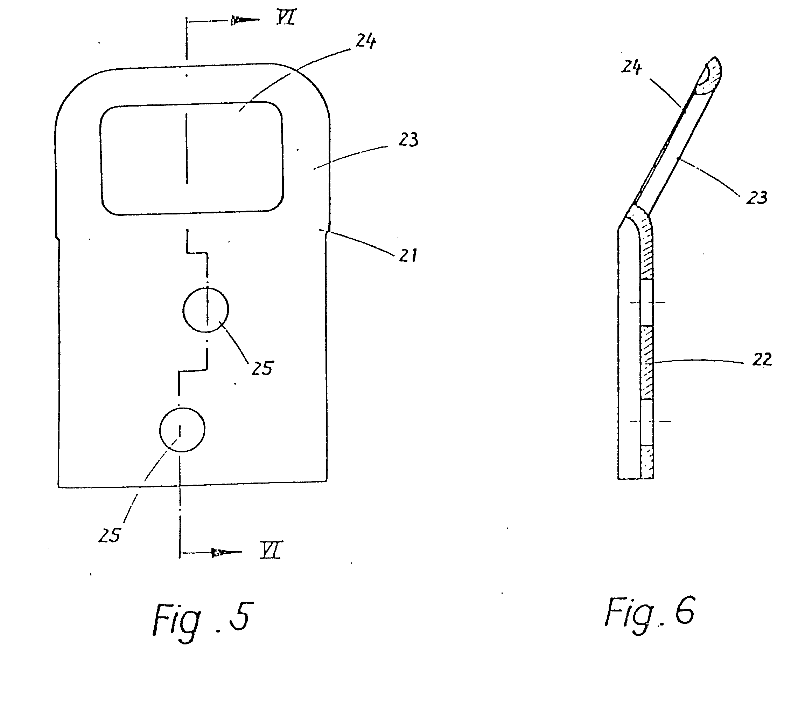

In Fällen, in denen der Gepäckträger zusammen mit einem Spanngurt benutzt werden soll, kann an dem Klemmteil in der in den Fig. 5, 6 dargestellte Gurthalter 21 befestigt werden. Dieser Gurthalter ist in Gestalt eines im Querschnitt U-förmigen, flachen, plattenartigen Profilteiles 22 ausgebildet, das an einem schräg abgebogenen Endteil 23 eine Gurtöffnung 24 aufweist. In dem Profilteil 22 sind zwei Bohrungen 25 angeordnet, die es gestatten, den auf das Klemmteil 10 aufgesetzten Gurthalter 21 mittels der beiden Klemmschrauben 20 zu befestigen.

Die Montage des beschriebenen Gepäckträgers ist sehr einfach:

Nach der Befestigung der beiden Klemmteile 10 an den beiden Ansatzstücken 13 mittels der Befestigungsschrauben 12 kann bei gelösten Klemmschrauben 20 die Auflagefläche des Gepäckträgers waagerecht eingestellt werden. Dabei bieten die beiden freien Schenkelenden 9 auf jeder Seite des Zweiradfahrzeuges einen sehr langen Verstellweg, wobei die beiden Schenkel 6 jedes Schenkelpaares individuell für sich eingestellt werden können. Nachdem die richtige Einstellage erreicht ist, werden die Klemmschrauben 20 angezogen, womit die Schenkelenden 9 und damit die Stütz-Schenkelpaare 6 lagerichtig fixiert sind. Der Gepäckträger kann mit den auf seinen freien Schenkelenden 9 aufgeschobenen Klemmteilen 10 vormontiert werden, die ihrerseits im vormontierten Zustand keine losen Teile aufweisen und in der Höhe justiert sind. Dies steht im Gegensatz zu den Verhältnissen bei dem Stand der Technik, bei dem Klemmschellen benutzt werden, die als lose Teile auf die Ansatzstücke 13 mittels der ebenfalls lose Teile bildenden Klemmschrauben befestigt sind.

Anstelle der beiden nebeneinanderliegend angeordneten Klemmkeile oder -konen 15 kann die Anordnung auch derart getroffen sein, dass lediglich ein einziger Klemmkeil oder -konus 15 vorgesehen ist, der sich über die Länge des Klemmteiles 10 bis in die Nähe der Befestigungsschraube 12 erstreckt und in dem zwei – in Längsrichtung der beiden Schenkelenden 9 gesehen – im Abstand angeordnete Gewindebohrungen 19 angeordnet sind, von denen jede eine Klemmschraube 20 enthält. Die beiden Gewindebohrungen 19 und die Klemmschrauben 20 sind in der aus Fig. 2, 3 ersichtlichen Weise seitlich etwas gegeneinander versetzt, so dass immer eine Gewindebohrung 19 unmittelbar neben dem zugeordneten Schenkelende 9 verläuft, womit die zugeordnete Klemmschraube 20 auf dieses Schenkelende eine hohe Klemmwirkung ausüben kann.

Die beiden Schenkel 6 jedes Stütz-Schenkelpaares und insbesondere auch die freien Schenkelenden 9 können unterschiedliche Durchmesser aufweisen. Auch können die Schenkelenden 9 und die Klemmkeile oder -konen 15 mit unterschiedlicher Härte hergestellt sein, um damit ein Mitdrehen der kreiskegelförmigen Konen bei der Montage zu vermeiden.

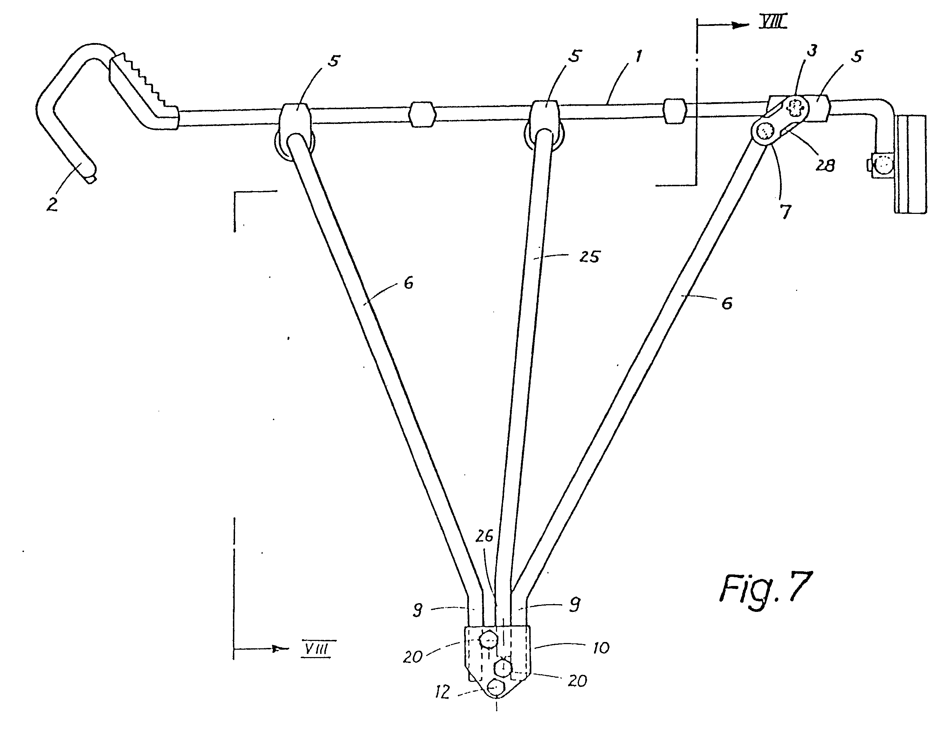

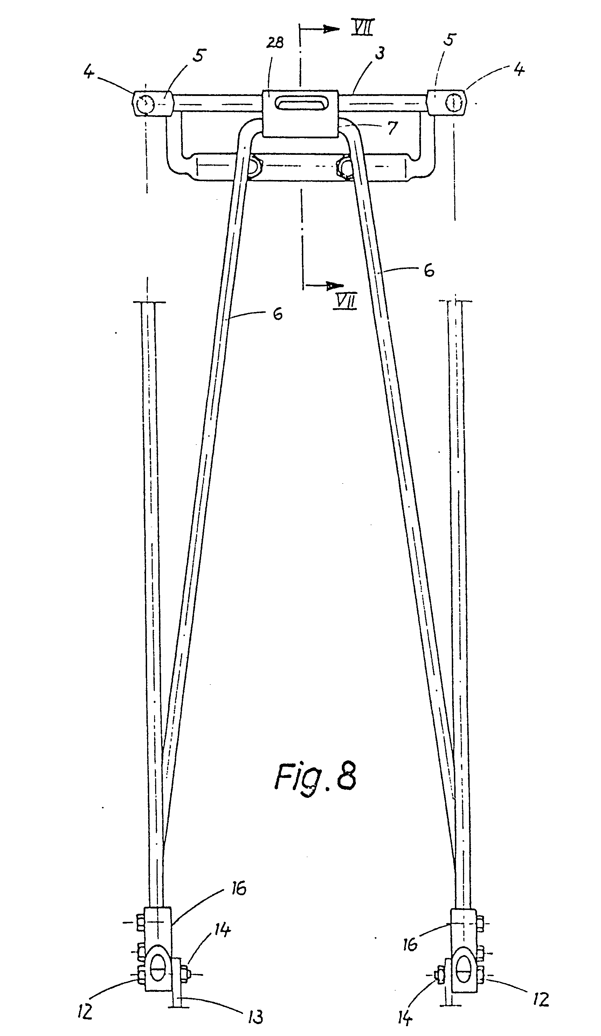

In den Fig. 7 und 8 ist ein weiteres Ausführungsbeispiel eines Gepäckträgers veranschaulicht, bei dem Bauelemente, die Bauelementen des Gepäckträgers nach den Fig. 1 und 2 entsprechen, mit denselben Bezugszeichen versehen und nicht erneut beschrieben sind.

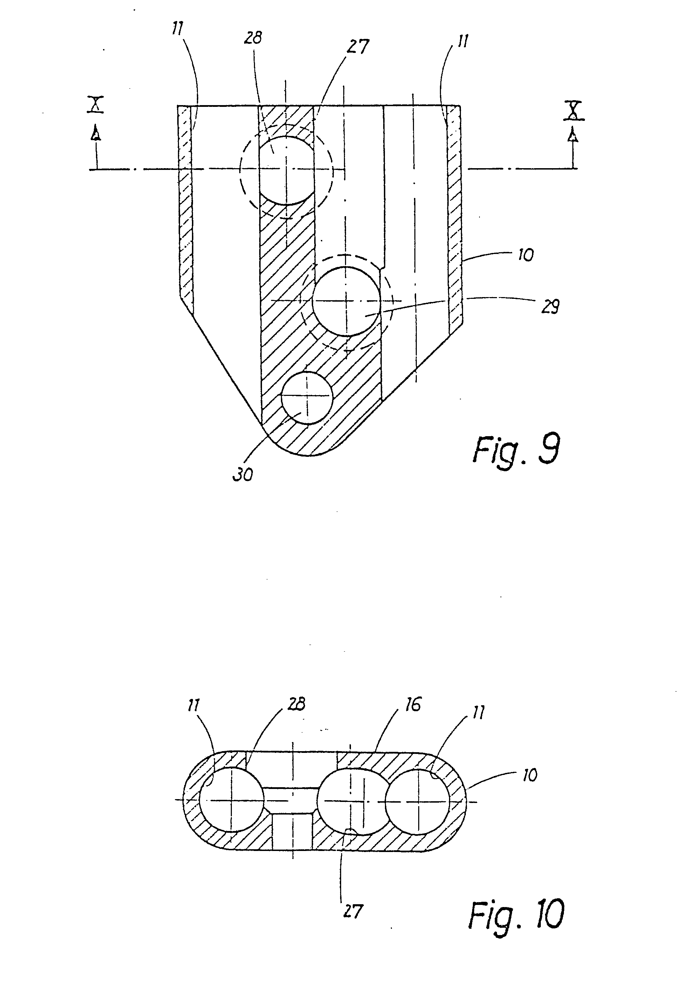

Der Gepäckträger nach den Fig. 7 und 8 enthält auf beiden Seiten zusätzlich zu dem V-förmig aufeinander zu verlaufenden Paar Stützschenkeln 6 einen weiteren mittleren Stützschenkel 25. Die beiden mittleren Stützschenkel 15 sind wiederum über einen einstückig angeformten Querschenkel 7 miteinander verbunden, der über Kunststofflagerteile 5 an dem Rahmen 1 gelenkig angebracht ist. An seinem freien Ende ist der mittlere Stützschenkel 25 bei 26 derart abgebogen, dass das abgebogene Ende parallel zu den Schenkelenden 9 der Schenkel 6 verläuft. Das Schenkelende 26 ist ebenfalls in dem Klemmteil 10 befestigt, das hierzu eine weitere Aufnahmebohrung 27 enthält, wie dies aus den Fig. 9 und 10 ersichtlich ist.

Zur Erhöhung der Seitensteifigkeit des Gepäckträgers nach den Fig. 7 und 8 und zur Verringerung der seitlichen Schwingungsempfindlichkeit laufen die hinteren beiden Stützschenkel 6, die sich, bezogen auf das Fahrzeug, gegenüberstehen, ausgehend von den Klemmteilen 10, in Richtung auf dem Rahmen 1 des Gepäckträgers aufeinander zu, wie dies in Fig. 8 ersichtlich ist. Der Querschenkel 7 dieser beiden Stützschenkel 6 hat demzufolge auch eine geringere Länge als dies der Breite des Rahmens 1 entspricht und ist über ein zwei Durchgangsbohrungen enthaltendes Kunststofformteil 28 gelenkig mit der hinteren Querstrebe 3 verbunden, die durch eine der Durchgangsbohrung des Kunststofformteils 28 führt, während durch die andere Durchgangsbohrung der Querschenkel 7 verläuft. Aufgrund dieser Befestigungsart der hinteren Stützschenkel 6 können Herstellungs- und Befestigungstoleranzen bei dem Gepäckträger mit drei Stützschenkeln zu jeder Seite leicht ausgeglichen werden.

Das insbesondere in den Fig. 9 und 10 veranschaulichte Klemmteil 10 für den Gepäckträger nach den Fig. 7 und 8 unterscheidet sich von dem Klemmteil nach den Fig. 3 und 4 im wesentlichen dadurch, dass zwischen den beiden äusseren Aufnahmebohrungen 11 für die Schenkelenden 9 des vorderen und des hinteren Stützschenkels 6 die zusätzliche Aufnahmebohrung 27 für das Schenkelende 26 des mittleren Stützschenkels 25 vorgesehen ist. Sämtliche Aufnahmebohrungen 11 und 27 verlaufen parallel zueinander und ihre Achsen liegen in einer gemeinsamen Ebene.

Der Abstand der Aufnahmebohrung 27 von einer der äusseren Aufnahmebohrungen 11, in Fig. 9 der rechten Aufnahmebohrung 11, ist so gewählt, dass sich die Aufnahmebohrung 11 und die als Sackloch ausgeführte Aufnahmebohrung 27 über die gesamte Länge der Aufnahmebohrung 27 überschneiden, wie dies Fig. 10 zeigt.

Zur Befestigung aller drei Schenkelenden 9 und 10 sind wiederum insgesamt zwei Klemmkonen 15 vorgesehen, die in entsprechenden Stufenbohrungen 28 und 29 sitzen, die rechtwinklig zu den Aufnahmebohrungen 11 bzw. 27 verlaufen.

Die beiden Stufenbohrungen 28 und 29 sind, wie Fig. 9 zeigt, auf unterschiedlichen Höhen angebracht, wobei die Stufenbohrungen 29 unterhalb der Aufnahmebohrung 27 vorgesehen ist und durch eine seitliche Öffnung mit der rechten Aufnahmebohrung 11 in Verbindung steht. Die Aufnahmebohrung 28 hingegen sitzt oberhalb der Stufenbohrung 29, und zwar zwischen der Aufnahmebohrung 27 und der von dieser getrennten linken Aufnahmebohrung 11, wobei die Stufenbohrung 28 ebenso wie die Stufenbohrung 29 teilweise die angrenzenden Aufnahmebohrungen 11 bzw. 27 durchsetzt, wie dies für die Stufenbohrung 28 in Fig. 10 veranschaulicht ist. Auf diese Weise kann ein in die Stufenbohrung 28 bzw. 29 eingesetzter Klemmkonus 15 in die jeweils benachbarten Aufnahmebohrungen 11 bzw. 27 eindringen und die darin befindlichen Schenkelenden 9 und 26 festklemmen, sobald, wie oben beschrieben, die Schraube 20 von der dem Klemmkonus 15 gegenüberliegenden Seite des Klemmteiles 10 her durch die Stufenbohrung 28, 29 hindurch in den Klemmkonus 15 eingedreht und festgezogen wird.

Zur Montage werden zunächst die beiden Klemmteile 10 mittels der Befestigungsschrauben 12, die durch die zugehörigen Bohrungen 30 hindurchführen, an den Ansatzstücken 13 befestigt. Bei gelösten Klemmschrauben 20 können nun die Schenkelenden 9 und 26 in die zugehörigen Aufnahmebohrungen 11 und 27 eingesteckt werden, wobei durch Längsverschiebung der Schenkelenden 9 und 26 in den Aufnahmebohrungen 11 und 27 die Höhe und die Neigung des Gepäckträgers eingestellt werden kann. Sobald die gewünschte Einstellage erreicht ist, werden die Klemmschrauben 20 angezogen, wodurch die Klemmkonen 15 in die zugehörigen Stufenbohrungen 28 und 29 hereingezogen werden und die Schenkelenden 9 und 26 in den Aufnahmebohrungen 11 und 27 festklemmen. Dabei klemmt der in der Stufenbohrung 29 sitzende Klemmkonus 15 lediglich das Schenkelende 9, das in der rechten Aufnahmebohrung 11, bezogen auf Fig. 9, sitzt, was insoweit eine Vormontage zulässt, da die in den anderen beiden Aufnahmebohrungen 11 und 27 sitzenden Schenkelenden 9 und 26 in diesem Falle noch verstellbar sind. Erst, wenn auch der in der Stufenbohrung 28 sitzende Klemmkonus 15 verspannt wird, werden auch die übrigen Schenkelenden 9 und 26 festgelegt.

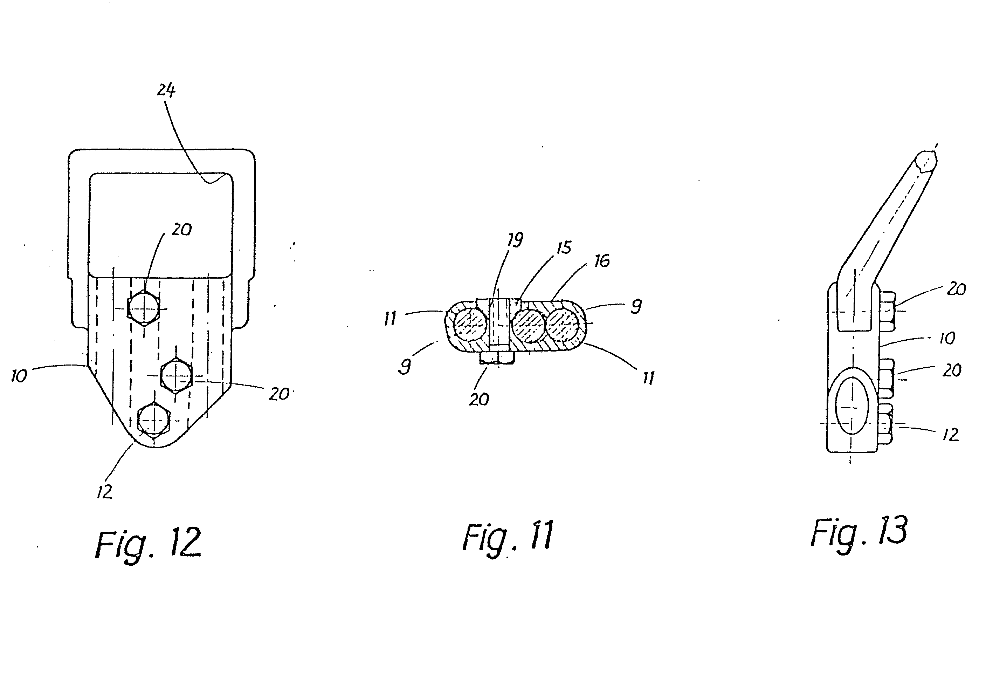

Dadurch, dass sich die Aufnahmebohrung 27 und die rechte Aufnahmebohrung 11 überschneiden, werden durch den in der Stufenbohrung 28 sitzenden Klemmkonus 15 alle Schenkelenden 9 und 26 gleichzeitig fesgeklemmt, und zwar wird das in der linken Aufnahmebohrung 11 steckende Schenkelende 9 durch den Klemmkonus 15 unmittelbar festgelegt, während das Schenkelende 26 von dem Klemmkonus 15 gegen das Schenkelende 9, das in der rechten Aufnahmebohrung 11 sitzt, gedrückt wird, wie in Fig. 11 gezeigt.

Wenn keine Vormontage der Klemmteile auf den hinteren Stützschenkel 6 erforderlich ist, braucht in die Stufenbohrung 29 kein Klemmkonus 15 eingesetzt werden bzw. es kann auch die Stufenbohrung 29 entfallen, denn die Klemmung kann allein mit Hilfe des in der Stufenbohrung 28 sitzenden Klemmkonus 15 bewerkstelligt werden.

In den Fig. 12 und 13 ist ein Klemmteil 10 veranschaulicht, das sich von dem in Fig. 9 und 10 gezeigten Klemmteil 10 durch eine einstückig angeformte Gurtöse 24 unterscheidet, die seitlich neben den beiden äusseren Aufnahmebohrungen 11 abgeht und schräg nach aussen von der Fahrzeugmitte wegsteht.

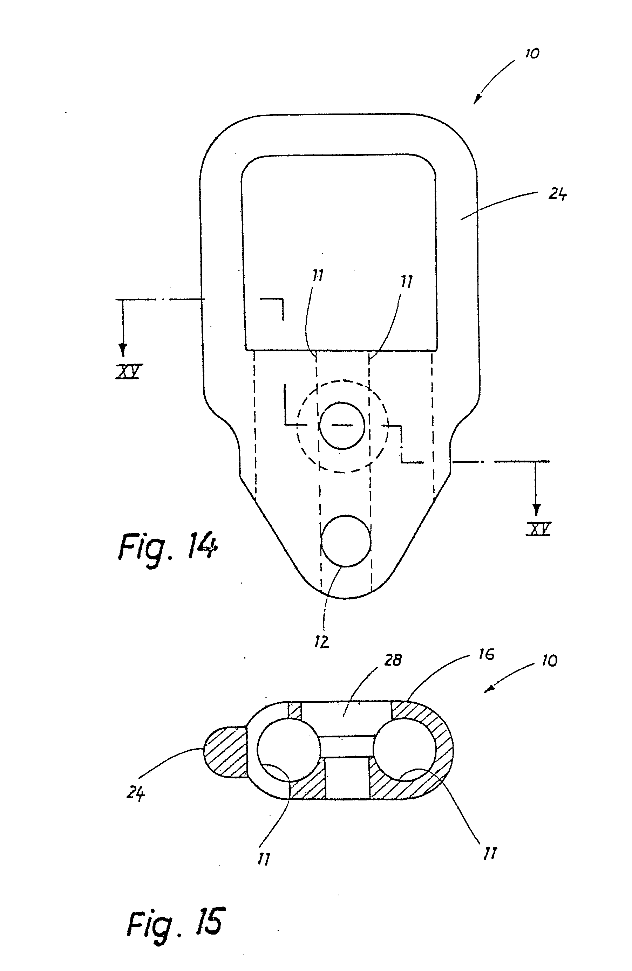

In den Fig. 14 und 15 ist ein weiteres Ausführungsbeispiel des Klemmteils 10 veranschaulicht, das ähnlich wie das Klemmteil nach Fig. 9 aufgebaut ist, jedoch zum Befestigen des in den Fig. 1 und 2 gezeigten Fahrradgepäckträgers mit zwei Stützschenkelpaaren 6 vorgesehen ist. Dementsprechend enthält das Klemmteil 10 zwei parallel im Abstand zueinander verlaufende Aufnahmebohrungen 11, zwischen denen im unteren Bereich des Klemmteils 10 die Bohrung 12 für die Schraube zum Befestigen des Klemmteils 10 an dem entsprechenden, nicht weiter gezeigten, Rahmenteil vorgesehen ist.

Oberhalb der Bohrung 12 ist mittig zwischen den beiden Aufnahmebohrungen 11 lediglich eine Stufenbohrung 28 vorgesehen, die rechtwinklig zu den Längsachsen der Aufnahmebohrungen 11 verläuft, wie dies auch bei dem Klemmteil nach den Fig. 9 und 10 der Fall ist. Dabei durchsetzt derjenige Abschnitt der Stufenbohrung 28 mit dem grösseren Durchmesser, wie Fig. 14 zeigt, teilweise die Aufnahmebohrungen 11, was in der Seitenwand der Aufnahmebohrungen 11 zu einer entsprechenden Öffnung führt, durch die hindurch ein im Abschnitt mit dem grossen Durchmesser der Stufenbohrung 28 eingesetzter Klemmkonus, wie er bei 15 in Fig. 4 gezeigt ist, mit den Enden der Stützschenkelpaare 6 in Eingriff kommen kann.

Wenn bei dem Klemmteil 10 nach den Fig. 14 und 15 ein in den vorherigen Figuren veranschaulichter Klemmkonus in die Stufenbohrung 28 eingesetzt und mittels einer entsprechenden, von der gegenüberliegenden Seite her in die Stufenbohrung eingesteckte und in den Klemmkonus eingedrehte Schraube 20 angezogen wird, lassen sich beide Schenkelenden zugleich mittels eines Klemmkonus reibschlüssig in den Aufnahmebohrungen 11 festklemmen.

**Patentansprüche**

1. Gepäckträger für Zweiradfahrzeuge, besteht aus einem die Gepäckauflagefläche enthaltenden Rahmen, von dem beidseitig jeweils wenigstens zwei, an dem Rahmen gegebenenfalls gelenkig befestigte, Stützschenkel V-förmig aufeinander zu nach unten verlaufen, deren freie Enden derart abgebogen sind, dass sie mit kleinem Abstand nebeneinanderliegend parallel zueinander ausgerichtet sind und auf jeder Seite mit einem an einem Ansatzstück des Fahrzeugrahmens zu befestigenden Klemmteil verbunden sind, in das die freien zylindrischen Enden der Schenkel eingesteckt sind und in dem sie mittels einer in einem Klemmteil zwischen den Schenkelenden angeordneten Klemmschraube höhenverstellbar fixiert sind, wobei die Klemmschraube in einer zu den Schenkelenden rechtwinkligen Bohrung sitzt und das Klemmteil mittels einer zu der Bohrung für die Klemmschraube parallelen Öffnung und einer darin sitzenden Befestigungsschraube an dem Ansatzstück anbringbar ist, dadurch gekennzeichnet, dass das Klemmteil (10) für jedes weder Fase noch Bohrung aufweisende, durchgehend zylindrische Schenkelende (9; 26) eine eigene Aufnahmebohrung (11; 11 und 27) enthält, die in dem Klemmteil (10) zueinander parallel verlaufen, und dass die Bohrung für die Klemmschraube (20) als abgestufte Durchgangsöffnung (17, 18; 29) ausgebildet ist, die die Aufnahmebohrung (11; 11 und 27) für das jeweils zu verklemmende Schenkelende (9; 9 und 26) seitlich anschneidet und in der zum Fixieren des jeweiligen Schenkelendes (9; 9 und 26) ein Klemmkeil (15) mit seinem verjüngten Ende voraus eingesetzt ist, der mit seiner Keil- bzw. Konusfläche (18) an dem Schenkelende (9; 9 und 26) anliegt und mittels der Klemmschraube (20) gegen das Schenkelende (9; 9 und 26) verspannbar ist.

2. Gepäckträger nach Anspruch 1, dadurch gekennzeichnet, dass jeder der beiden Aufnahmebohrungen (11) ein eigenes Klemmstück (15) mit Klemmschraube (20) zugeordnet ist.

3. Gepäckträger nach Anspruch 1 oder 2, dadurch gekennzeichnet, dass das flache Klemmteil (10) auf einer Seite eine an das Ansatzstück (13) anzulegende Anlagefläche (16) aufweist, und das Klemmstück (15) bzw. die Klemmstücke (15) im Bereiche dieser Anlagefläche (16) angeordnet ist bzw. sind.

4. Gepäckträger nach Anspruch 1, dadurch gekennzeichnet, dass der Klemmkeil oder -konus (15) eine Gewindebohrung (19) für die von der Aussenseite des Klemmteiles (10) her zugängliche Klemmschraube (20) aufweist.

5. Gepäckträger nach einem der vorhergehenden Ansprüche, dadurch gekennzeichnet, dass jedes Klemmstück (15) und die zugehörige Klemmschraube (20) in dem Bereich zwischen den beiden Aufnahmebohrungen (11) angeordnet sind.

6. Gepäckträger nach den Ansprüchen 2 und 5, dadurch gekennzeichnet, dass die beiden Klemmstücke (15) in Richtung der beiden Schenkelenden (9) gesehen nebeneinanderliegend angeordnet sind.

7. Gepäckträger nach einem der vorhergehenden Ansprüche, dadurch gekennzeichnet, dass an dem Klemmteil (10) ein eine Gurtöse (24) aufweisender Gurthalter (21) angeordnet ist.

8. Gepäckträger nach Anspruch 7, dadurch gekennzeichnet, dass der Gurthalter (21) an dem Klemmteil (10) mittels der Klemmschraube(n) (20) befestigt ist.

9. Gepäckträger nach einem der vorhergehenden Ansprüche, dadurch gekennzeichnet, dass an dem Klemmteil (10) eine Gurtöse (24) einstückig angeformt ist.

10. Gepäckträger nach Anspruch 1, dadurch gekennzeichnet, dass zwischen den Stützschenkeln (6) jedes Paares ein weiterer Stützschenkel (25) angeordnet ist, dessen freies Ende (26) zu den Schenkelenden (9) des zugehörigen Stützschenkelpaares (6) parallel verlaufend abgebogen ist und dass das Klemmteil (10) für den mittleren Stützschenkel eine dritte Aufnahmebohrung (27) aufweist, die zwischen den beiden äusseren Aufnahmebohrungen (11) für den vorderen und den hinteren Stützschenkel (6) liegt und parallel zu diesen Aufnahmebohrungen (11) verläuft.

11. Gepäckträger nach Anspruch 1, dadurch gekennzeichnet, dass diejenigen beiden Stützschenkel (6), die sich, bezogen auf die Fahrzeuglängsachse gegenüberstehen und am weitesten hinten an dem die Gepäckauflagefläche bildenden Rahmen (1) angreifen, ausgehend von den Klemmteilen (10) in Richtung auf den Rahmen (1) aufeinander zulaufend angeordnet sind.

12. Gepäckträger nach Anspruch 10, dadurch gekennzeichnet, dass die Längsachsen der Aufnahmebohrungen (11, 27) alle in einer Ebene liegen.

13. Gepäckträger nach Anspruch 10, dadurch gekennzeichnet, dass die dritte Aufnahmebohrung (27) für den mittleren Stützschenkel (25) als Sackloch ausgeführt ist.

14. Gepäckträger nach Anspruch 10, dadurch gekennzeichnet, dass die dritte Aufnahmebohrung (27) für den mittleren Stützschenkel (25) derart dicht an einer der beiden äusseren Aufnahmebohrungen (11) angeordnet ist, dass sie sich randseitig mit dieser überschneidet, und dass zwischen der dritten Aufnahmebohrung (27) für den mittleren Stützschenkel (25) und der von dieser getrennten äusseren Aufnahmebohrung (11) eines der Klemmstücke (15) angeordnet ist, das durch eine wandseitige Öffnung in der dritten Aufnahmebohrung (27) und eine wandseitige Öffnung in der von der dritten Aufnahmebohrung (27) getrennten äusseren Aufnahmebohrung (11) auf den zugeordneten Schenkelenden (9, 26) abgestützt ist.

15. Gepäckträger nach einem der vorhergehenden Ansprüche, dadurch gekennzeichnet, dass die Klemmstücke (15) in der Höhe gegeneinander versetzt sind und dass eines der Klemmstücke (15) unterhalb der dritten Aufnahmebohrung (27) angeordnet ist.

16. Gepäckträger nach einem der vorhergehenden Ansprüche, dadurch gekennzeichnet, dass der Klemmkeil oder -konus (15) und die zugeordneten Schenkelenden (9, 26) jeweils eine unterschiedliche Härte aufweisen.

## Claims

1. A luggage carrier for two-wheel vehicles, comprising a frame which contains the luggage bearing surface and from which on both sides at least two supporting arms, if necessary pivotably attached to the frame, converge downwardly in V-shape, their free ends being so bent that they are aligned at a small distance a longside and parallel with one another and are connected on each side to a clamping member which is to be attached to an extension member of the vehicle frame and into which the free cylindrical ends of the arms are inserted and in which they are vertically adjustably fixed by means of a locking screw disposed in the clamping member between the ends of the arms, the locking screw being disposed in a bore at right angles to the ends of the arms and the clamping member being placeable on the extension member by means of an aperture parallel with the bore for the locking screw and a fastening screw disposed in such aperture, characterized in that the clamping member (10) comprises for each continuously cylindrical arm end (9; 26), having neither chamfer nor bore, its own receiving bore (11; 11 and 27), such bores extending parallel with one another in the clamping member (10), and the bore for the locking screw (20) takes the form of a stepped continuous aperture (17, 18; 29) which laterally intersects the receiving bore (11; 11 and 27) for the particular arm end (9; 9 and 26) to be clamped and in which for the fixing of the particular arm end (9; 9 and 26) a clamping wedge (15) is inserted with its tapering end first, the clamping wedge (15) bearing via its wedge or conical surface (18) against the arm end (9; 9 and 26) and being clampable by means of the locking screw (20) against the arm end (9; 9 and 26).

2. A luggage carrier according to claim 1, characterized in that its own clamping element (15) with locking screw (20) is associated with each of the receiving bores (11).

3. A luggage carrier according to claims 1 or 2, characterized in that the flat clamping member (10) has on one side a bearing surface (16) to be applied to the extension member (13) and the or each clamping element (15) is disposed in the zone of such bearing surface (16).

4. A luggage carrier according to claim 1, characterized in that the clamping element or cone (15) has a screwthreaded bore (19) for the locking screw (20) accessible from the outside of the clamping member (10).

5. A luggage carrier according to one of the preceding claims, characterized in that each clamping element (15) and the associated locking screw (20) are disposed in the zone between the two receiving bores (11).

6. A luggage carrier according to claims 2 and 5, characterized in that the two clamping elements (15) are disposed one beside the other, viewed in the direction of the two arm ends (9).

7. A luggage carrier according to one of the preceding claims, characterized in that a belt holder (21) having a belt eyelet (24) is disposed on the clamping member (10).

8. A luggage carrier according to claim 7, characterized in that the belt holder (21) is attached to the clamping member (10) by means of the locking screw(s) (20).

9. A luggage carrier according to one of the preceding claims, characterized in that a belt eyelet (24) is formed unitarily on the clamping member (10).

10. A luggage carrier according to claim 1, characterized in that disposed between the supporting arms (6) of each pair is another supporting arm (25) whose free end (26) is bent extending parallel with the arm ends (9) of the associated pair (6) of supporting arms, and the clamping member (10) for the central supporting arm has a third receiving bore (27) which is disposed between the two outermost receiving bores (11) for the front and rear supporting arms (6) and extends parallel with such receiving bores (11).

11. A luggage carrier according to claim 1, characterized in that those two supporting arms (6) which, referred to the vehicle longitudinal axis, are opposite one another and engage furthest to the rear with the frame (1) forming the luggage bearing surface are disposed starting from the clamping members (10) convergently in the direction of the frame (1).

12. A luggage carrier according to claim 10, characterized in that the longitudinal axes of the receiving bores (11, 27) all lie in one plane.

13. A luggage carrier according to claim 10, characterized in that the third receiving bore (27) for the central supporting arm (25) takes the form of a blind bore.

14. A luggage carrier according to claim 10, characterized in that the third receiving bore (27) for the central supporting arm (25) is disposed so close to one of the two outer receiving bores (11) as to intersect the latter on the edge side, and disposed between the third receiving bore (27) for the central supporting arm (25) and the outer receiving bore (11) separated therefrom is one (15) of the clamping elements, which bears against the associated arm ends (9, 26) via a wall side aperture in the third receiving bore (27) and a wall side aperture in the outer receiving bore (11) separated from the third receiving bore (27).

15. A luggage carrier according to one of the preceding claims, characterized in that the clamping elements (15) are offset vertically in relation to one another and one (15) of the clamping elements is disposed below the third receiving bore (27).

16. A luggage carrier according to one of the preceding claims, characterized in that the clamping element or cone (15) and the associated arm ends (9, 26) each have a different hardness.

**Revendications**

1. Porte-bagages pour deux-roues, composé d'un cadre comprenant la surface d'appui de bagages, duquel partent sur chacun des deux côtés, en convergeant vers le bas en forme de V, au moins deux bras d'appui fixes éventuellement de façon articulée au cardre, dont les extrémités libres sont courbées de telle façon qu'elles soient orientées parallèlement à faible distance l'une de l'autre et reliées sur chaque côté à une pièce de serrage qui est destinée à être fixée à une pièce de raccordement du cadre de véhicule, dans laquelle sont insérées les extrémités cylindriques libres des bras et dans laquelle elles sont fixées réglables en hauteur au moyen d'une vis de serrage disposée dans la pièce de serrage entre les extrémités des bras, la vis de serrage étant logée dans un trou disposé perpendiculairement aux extrémités des bras et la pièce de serrage pouvant être fixée à la pièce de raccordement au moyen d'une ouverture parallèle au trou pour la vis de serrage et d'une vis de fixation logée dans cette ouverture, caractérisé en ce que la pièce de serrage (10) présente un trou de réception (11; 11 et 27) séparé pour chaque extrémité de bras (9; 26) entièrement cylindrique et ne présentant ni un chanfrein ni un trou, lesdits trous de réception s'étendant parallèlement dans la pièce de serrage (10), et que le trou pour la vis de serrage (20) est réalisé comme ouverture de passage (17, 18; 29) étagée qui coupe latéralement le trou de réception (11; 11 et 27) pour l'extrémité de bras à serrer et dans laquelle est insérée, en vue de la fixation de l'extrémité de bras (9; 9 et 26), une clavette de serrage (15) avec son extrémité de section réduite vers l'avant, clavette qui est appliquée par sa surface de coin ou de cône (18) contre l'extrémité de bras (9; 9 et 26) et peut être serrée contre l'extrémité de bras (9; 9 et 26) au moyen de la vis de serrage (20).

2. Porte-bagages selon la revendication 1, caractérisé en ce qu'à chacun des deux trous de réception (11) est associée une clavette (15) avec vis de serrage (20).

3. Porte-bagages selon la revendication 1 ou 2, caractérisé en ce que la pièce de serrage (10) plate comporte sur un côté un plan d'appui (16) à appliquer contre la pièce de raccordement (18), et que la clavette (15) ou les clavettes (15) sont disposées dans la zone de ce plan d'appui (16).

4. Porte-bagages selon la revendication 1, caractérisé en ce que la clavette (15) présente un trou taraudé (19) pour la vis de serrage (20) accessible à partir de la face extérieure de la pièce de serrage (10).

5. Porte-bagages selon l'une quelconque des revendications précédentes, caractérisé en ce que chaque clavette (15) et la vis de serrage (20) associée sont disposées dans la zone entre les deux trous de réception (11).

6. Porte-bagages selon les revendications 2 et 5, caractérisé en ce que, vu dans le sens des deux extrémités de bras (9), les deux clavettes (15) sont disposées côté à côté.

7. Porte-bagages selon l'une quelconque des revendications précédentes, caractérisé en ce que sur la pièce de serrage (10) est disposé un accroche-sangle (21) possédant un œillet de sangle (24).

8. Porte-bagages selon la revendication 7, caractérisé en ce que l'accroche-sangle (21) est fixé à la pièce de serrage (10) au moyen de la (des) vis de serrage (20).

9. Porte-bagages selon l'une quelconque des revendications précédentes, caractérisé en ce qu'un œillet de sangle (24) est formé d'une seule pièce sur la pièce de serrage (10).

10. Porte-bagages selon la revendication 1, caractérisé en ce qu'entre les bras d'appui (6) de chaque paire est disposé un autre bras d'appui (25) dont l'extrémité libre (26) est courbée pour s'étendre parallèlement aux extrémités de bras (9) de la paire de bras d'appui (6) associée et que la pièce de serrage (10) comporte pour le bras d'appui médian un troisième trou de réception (27) qui se trouve entre les deux trous de réception (11) extérieurs pour les bras d'appui (6) avant et arrière et s'étend parallèlement à ces trous de réception (11).

11. Porte-bagages selon la revendication 1, caractérisé en ce que les deux bras d'appui (6), qui se font face par rapport à l'axe longitudinal du deux-roues et viennent en prise le plus en arrière avec le cadre (1) formant la surface d'appui de bagages, sont convergeants à partir des pièces de serrage (10) en direction du cadre (1).

12. Porte-bagages selon la revendication 10, caractérisé en ce que les axes longitudinaux des trous de réception (11, 27) se trouvent tous dans un même plan.

13. Porte-bagages selon la revendication 10, caractérisé en ce que le troisième trou de réception (27) pour le bras d'appui (25) médian est réalisé comme trou borgne.

14. Porte-bagages selon la revendication 10, caractérisé en ce que le troisième trou de réception (27) pour le bras d'appui (25) médian est disposé si près d'un des deux trous de réception (11) extérieurs que leurs bords se coupent, et qu'entre le troisième trou de réception (27) pour le bras d'appui (25) médian et le trou de réception (11) extérieur séparé de celui-ci est disposée l'une des clavettes (15) qui est en appui sur les extrémités de bras (9, 26) associés à travers une ouverture côté paroi dans le troisième trou de réception (27) et une ouverture côté paroi dans le trou de réception (11) extérieur séparé du troisième trou de réception (27).

15. Porte-bagages selon l'une quelconque des revendications précédentes, caractérisé en ce que les clavettes (15) sont décalées en hauteur l'une par rapport à l'autre et que l'une des clavettes (15) est disposée au-dessous du troisième trou de réception (27).

16. Porte-bagages selon l'une quelconque des revendications précédentes, caractérisé en ce que la clavette (15) et les extrémités de bras (9, 26) associées possèdent des dûretés différentes.

Fig. 1

Fig. 2

Fig. 3

Fig. 4

Fig. 6

Fig. 5

Fig. 7

0 122 520

Fig. 8

Fig. 9

Fig. 10

Fig. 12

Fig. 11

Fig. 13

0 122 520

Fig. 14

Fig. 15